# EUROPEAN PATENT APPLICATION

(11) **EP 1 110 861 A1**
(43) Date of publication of application: **27.06.2001**
(21) Application number: 00126857.2
(22) Date of filing: 07.12.2000
(51) Int. Cl.: B64D 25/12

(54) **Capsule ejection system for passenger aircraft**

(30) Priority: 20.12.1999 US 467790
(71) Applicant: Chiu, Chui-Wen, Toronto, Ontario M3A 2H8 (CA)
(72) Inventor: Chiu, Chui-Wen, Toronto, Ontario M3A 2H8 (CA)
(74) Representative: Hano, Christian, Dipl.-Ing.

(57) **Abstract**

Nowadays, travelling by airplanes has been well established, and air accident rate is on the whole very low. However, as the number of air flights increases, accidents with the fatality of more than one hundred people have occurred. With the occurrence of such accidents, it poses fear to tens of thousands of air travellers that catastrophe may fall upon them in any flight. Two hundred and thirty people died on August 20, 1997 aboard Transworld Airline Flight 800, and two hundred and ninety people perished on Swiss Airline Flight 111 on September 20, 1998, while two hundred and seventeen people died in the air disaster on Egypt Airline Flight 990 on October 31, 1999. These accidents occurred prior to my invention because the airplanes failed to provide the appropriate means for saving the lives of the travellers in these accidents. Soft pillows, woolen blankets, oxygen masks, seat belts and floatation jackets did not save any life in these accidents. The crux of this invention is to provide means for blasting the airplane body apart in an accident so as to enable separate passengers cabin sections to break away automatically from the airplane. The break away passengers cabin sections will formed independent sealed units similar to unhitched train carts passing through a tunnel so as to protect the passengers who may remain sitting in each cabin. With such safety provision, the lives of the passengers of the Transworld, Swiss, and Egypt Airlines accidents would have been saved; also, the fear of billion of air travel passengers would be dispelled.

## Description

### TECHNICAL FIELD

This invention relates to an airplane construction which may save lives of the passengers in an air accident due to mechanical malfunction or other flight difficulties.

### BACKGROUND OF THE INVENTION

When a heavy passenger airplane loses power or having other flight difficulties, the consequences would be the crash of the airplane to the ground. It does not require much descriptive account from the passengers involved in such air crash for any one to realize the horrific outcome of such air crash. Even children or some people who are ignorant of airplane in the 60 billion people of the world could visualize the catastrophe. Whenever, an air disaster occurs, it causes great concern to every one regardless if one knows any acquaintance in such disaster. Of course, if one actually has acquaintances in the accident, one would only be relieved when news of their safety is received. Such fear of the potential happening of an air accident by the tens of thousands of air travellers daily and the worry imposed on their families and acquaintances are phenomenal. This is the drawback of the present passenger planes and it imposes great pressure on the nerves of a vast number of people. Every time when an airplane runs into an air turbulence, it causes great concern by the passengers who would pray for the safety of the plane which is not under their control.

There have been great advances in the construction of airplane since its invention, which are the result of the phenomenal advancement in the technologies and knowledge in airplane engine, metal material, electronic communication, meteorology, and airport design. The design of the 747, the Airbus and other modern airplanes is the result of researches of millions of technical experts in these fields, and the modern airplane is a culmination of the development of airplane engine, metal alloy, various component parts, down to the airplane paint. Thus, the modern airplane building industry can truly provide superb high speed airplanes for transporting hundreds of passengers. However, thus far, in fact, the industry can not provide a safe airplane which is completely devoid of crash accident, resistant to adverse weather conditions or destruction due to bombs planted in the plane by a terrorist or attack by missiles. For this reason, each time for the passenger travelling by plane would naturally feel like having just escaped from death at the end of the trip. As the reliance of air transportation increases, such bad feeling occurs ever more often. It has been argued that the airplane accident rate is extremely low; however, for every air passenger regardless of man, woman or child, it can not escape having the bad feeling about the potential danger of death in air travel. For children and young men who trust their parents or awaiting for the resolution of human right problem, or other fare paying passengers who are not soldiers, it is a risk to ride the airplane taking them high into the sky; and in the event of an accident, all they can do to lessen the chance of death is clutching the pillow, tightening the safety belt, holding their heads against the back of the seat in front with their arms, and awaiting the plane weighing hundreds of tons to crash onto to the ground. The credit card they used to buy the ticket could only provide a monetary compensation to their death but not the saving of their lives. The sad eventuality merely results in the search for the flight recorder black box from the bottom of the ocean to find the cause of the accident. All over the world billions of people have to endure the burdened by such potential air travel danger. It is an unresolved legal problem facing the world and particularly the international court in the Hague which are concerned about human right. The key purpose of the present invention is to provide an absolute answer to the above one of the long unresolved sad problems for human being. This problem would become history starting from January 1, 2000 with the present invention.

### SUMMARY OF THE INVENTION

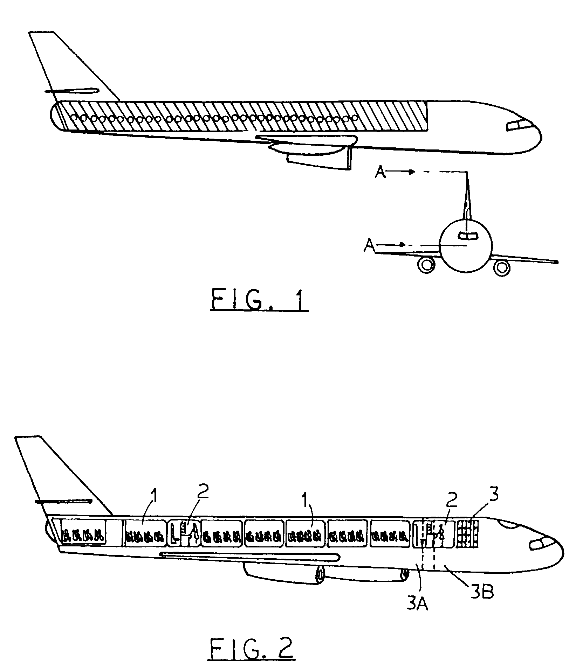

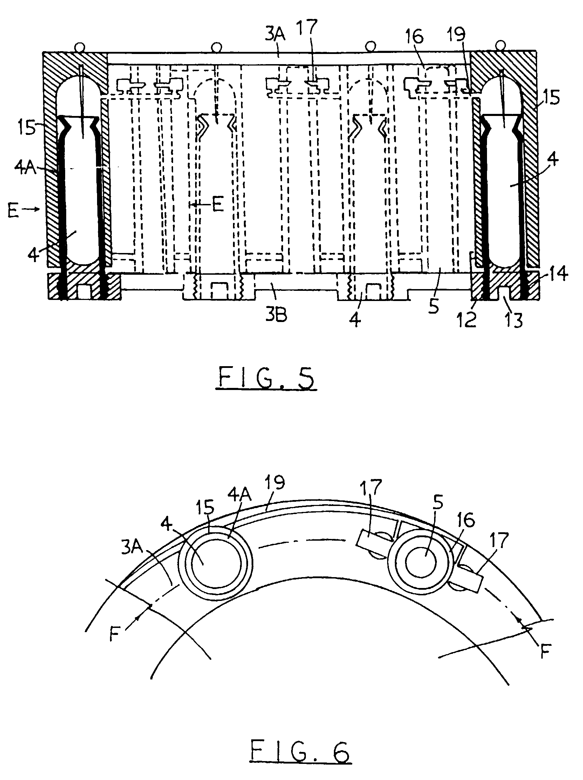

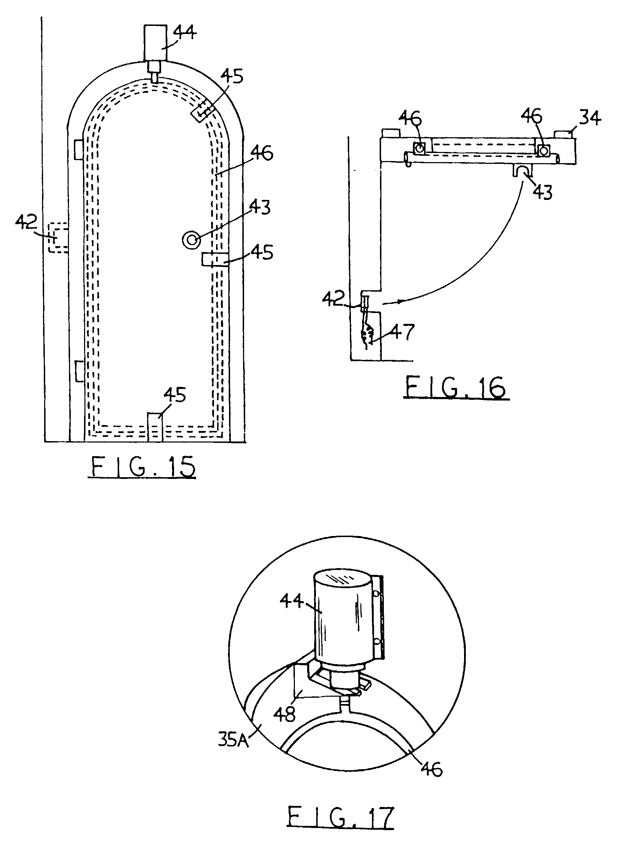

a. The most important principle of the invention is based on the concept that in the event of any air accident, the airplane is always fragile and it does not possess the sturdiness of an army tank. It must be designed with the main body of the plane which may be blasted apart within a split moment so as to enable the passengers cabin to break away from the plane. The final decision to separate the passengers cabin from the plane must be made by the pilot with consultation from the flight controller and the controlling computer software, so that the cabin could be separated from the rest of the plane. Therefore, the pilot, the flight attendants and all the passengers could escape the otherwise imminent death with the plane which undoubtedly would become their metal coffin. This is one of the important feature of the present invention.
   In the beginning of the airplane building industry, there was the difficulty in providing suitable support to the tires of the plane so as to withstand the tremendous shock during landing. Plane builders posted large rewards for any solution of such problem in order to gain an edge in the plane building market. In the first and second world wars, each side invested great efforts and money in the development of war planes ranging from the Wild Horse, Type Zero, B29 to the jet plane. After the war, large investments were made to advance the technology, and efforts were made to develop economically profitable commercial airplanes such as the B52 and 747. In the last century, emphasis has been made in the commercial airplane design for reducing the occurrence of air accident so as to eliminate completely accidents such as the Transworld Flight 800, Swiss Airline Flight 111, and Egypt Airline Flight 990 in which all passengers perished. The basic premise of the present invention is based on that no airplane can be built as sturdy as an army tank, and an airplane would disintegrate in an accident. In order to provide the ultimate solution to the design for eliminating total fatality in an air accident, the design must provide (1) automatic break away of the various portions of the plane body upon sudden occurrence of an air accident, (2) a freely movable and separable passengers cabin section which is provided with quick action safety sealing doors, parachutes, speed reducing missiles, and safety flotation air bags, (3) provision of an outer body serving like a tunnel extending from the front end to the tail end. An exit door is provided at the tail end through which the passengers cabin leaves the plane body.
b. The body of the plane and the passengers cabin section are provided with a double shell construction. The body of the plane and the passengers cabin are coupled togther with an umbilical construction by sharing common controls. The passengers cabin may consist of a single section or a plurality of sections as shown in Figures 2, 8, 9 to 17, 22, 2A and 2B. In the event of an accident, the passengers cabin separates immediately from the plane body and with its own safety parachutes and landing speed reduction missile would safely land on the ground. This design resolves the difficulty facing the pilot in the past having to desperately seeking the means of saving the lives of the passengers from the imminent death with the plane which has become no more than a metal coffin in the accident. The methods of separation may be provided by continuous missiles and air actuated spring lock plane body portions which may be broken apart with a blasting bomb with or without triggering fuse, missile with electromagnet coupling, static separation by cutting with laser, provision of high pressure upper and lower tires, and automatic fixed speed cutting means as shown in Figures 2A, 3 to 7, 7A, 20, 23, 26, 28, 32, 33A, 35, 35B, 36 to 41.
c. Dispose of the present method of using soft pillows, oxygen face masks, safety seat belts, self inflating life jackets as the means for life saving; instead, let the passengers remain at their seats listening to the music, and the automatic door is activated with a strong force in a split moment to seal the passengers cabin tightly. Furthermore, the air vent is shut off and the coupling lines will be cut. Every seat and every section in the cabin is provided with a plurality of parachutes, speed control missiles, inflatable rafts, self-propel mechanism, oxygen supply, fire extinguishers, heat insulation shell, and drinking water. The passengers cabin separates from the body of the plane by sliding on a plurality of rollers and after separation it will be supported by parachutes. One could imagine, without these provisions, the plane would fall quickly to the ground since it is not a glider and it weighs in excess of several tons to hundreds tons. During the accident, the pilot would be unable to report or communicate with the control tower and would be engaged busily in dealing with the changing condition of the plane. The flight recorder black box in those fatal flights to Europe could not record the actual scenario in the cabin during the accident, otherwise it would show that the flight attendants holding the soft pillows and blankets would be rolling on the floor and crashing against either the front or the back of the cabin; all passengers fearful of the imminent death would lose their dignity, and regardless of young or elderly could only care for themselves. Parents did not tell their children that using soft pillows, woolen blankets, oxygen masks, seat belts in an accident as demonstrated by the flight attendants could not save any life and they merely serve as mere comfort items before death. See Figures 2, 2B, 3B, 10, 15 to 20, and 22.
d. The passengers cabin either in the form of a single cabin or a plurality of sections, is separated by sliding away from the body of the plane with the provision of a plurality of rollers. Braking means similar to the ABS system used in an automobile is employed to control the separation sliding speed with sufficient pushing force so that proper distances are provided between the separate sections of the passengers cabin after they left the plane body. The arrangement as shown in Figure 15A is employed to control the separation and the closing the seal door, and the deployment of the parachutes. Shock absorbers are provided such that the passengers may safely remain in their seats during this operation without panic. If the cabin lands on water, the inflatable raft at each section of the cabin will be inflated automatically to maintain the cabin afloat so as to wait for rescue. With such provisions, starting in the new century there will be no longer be any threat to the lives of air travellers, pilots and flight attendants; and travellers on tens of thousands of air flights no longer will be fearful of any potential fatal air accident. See Figures 2B, 3B, 8, 10, 15A and 22B.

### BRIEF DESCRIPTION OF THE DRAWINGS

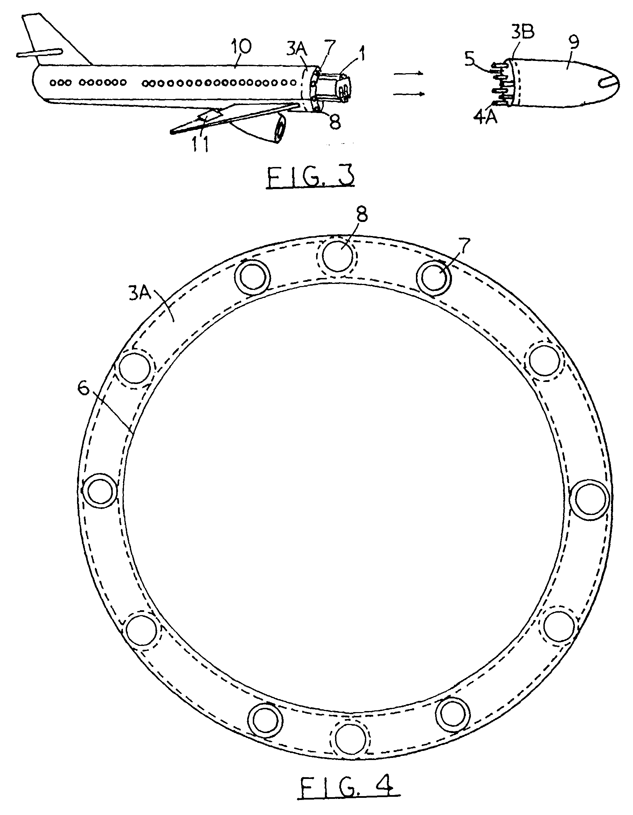

Figure 1 shows both a side view and a front view of an airplane according to the present invention. The side view is a partial cut view along line A-A of the front view to show the seats in the passengers cabin, which will further be shown in detail in Figure 2. Cut views are further shown in Figures 3, 4, 5, 6, and 7.

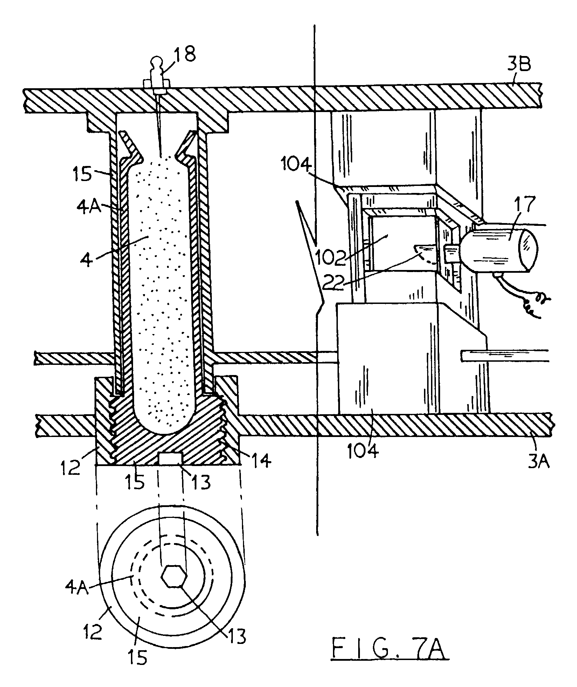

Figure 2 is a more detailed partial cut view along line A-A in Figure 1 showing in more detail the seat arrangement in the passengers cabin. The reference numeral "1" designates the plurality of separate sections of the passengers cabin. Normally, the separate sections are in communication with one another; but in an accident, each section may be cut off separately to sever its relationship to the control harness with the closing of the sealing door in each section which may then be separated individually from the body of the plane. See Figures 2B, 8 to 19. The reference numeral "2" designates a separate section containing the food preparation area and the toilet. The reference numeral "3" designates the shock absorbing mechanism for the passengers cabin, which consists of a combination of a plurality of springs and metal mounting rings. Reference numerals "3A" and "3B" designate the structure at which the plane body may be severed into a front section and rear portion. The point of separation is preferably located in front of the engine and the front landing wheels. The circular rings 3A and 3B in this structure may be pushed towards each other to lock them in place during fabrication and or pulled apart during separation. More detail will be shown in Figures 3 to 7 and 7A below.

Figure 3 is a side view showing the division of the front portion of the plane from the main body of the plane. The break up is activated by the pilot, after consultation with the computer, to determine the abandonment of the plane. Within seconds of this determination so as to save the lives of the hundreds of passengers who remains in their seats, the missiles within the metal ring 3B are activated to break the plane body as well as to release the spring locks so as to sever the front portion of the plane from main body of the plane housing the passengers cabin. The designations of the reference numerals are as follows:
4A: are the small missiles housed in the tubes 8 in the circular ring 3A.
4: are the solid fuel for the missiles.
5: are the couplings between the spring locks and the mounting.
6: is the bottom reinforcement for the circular metal rings.
7: in combination with 5 are the parts inserted into the metal rings to lock the metal rings 3A and 3B in place.
8: are the reverse facing tube for housing the missiles 4A in the circular ring 3B.
9: is the front portion of the plane body containing the interior cabin and the control cabin.
10: is the rear portion of the plane body containing the plurality of sections of the passengers cabin and storage compartment located below the passengers cabin.
11: is the landing and take off control flaps on the wing, which may be locked at the descending position.

Figure 4 shows a front view of the circular ring 3A which is mounted to the rear portion of the plane body and which is to couple with the circular ring 3B mounted at the front portion of the plane.

Figure 5 is a sectional side view along section line D-D in Figure 4 showing the combination of the circular ring 3A and 3B locked together. The designations of the reference numerals in this figure are as follows:
12: are cylindrical tubes having spiral threads formed on their inner side wall so that the missiles may be locked in place to facilitate changing and/or inspection of the missiles.
13: is a square key depression such that a square head key may be inserted into this depression for turning the missile for mounting or removing the latter.
14: designates the threads formed on the cylindrical tube.
15: are the mounting cylinders located in 3A for housing the missiles, which is shown as item 8 in Figure 3 above.
16: are the mounting sleeves in 3A, to which the mounting tubes in 3B are to be inserted to form the coupling 5 for locking 3A and 3B together.
17: are the pneumatic locking means for the springs. They serve to lock 3B to 3A together. When the missiles are activated; and compressed air will be directed from the missile housing tube to unlock these locking means.
18: is the firing device for the missiles.
19: are the compressed air ducts operative to direct the compressed air to 17 to unlock the locking means which will be shown in more detail in Figure 7 so as to sever and push forward the front portion B away from the rear portion A..
20: is the reinforcement for the mounting tubes 15 and 16.

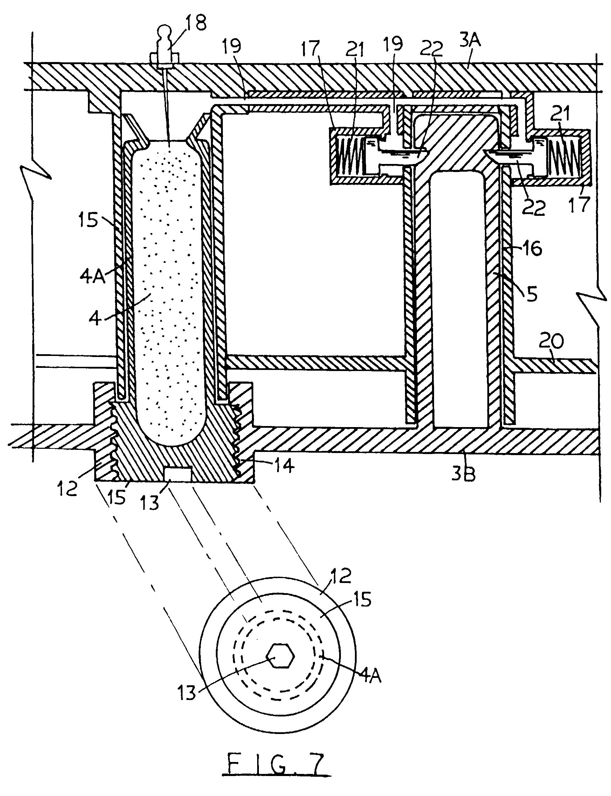

Figure 6 is a sectional side view along section line E-E showing the relationship between the missiles and their mounting.

Figure 7 is a sectional view along section line F-F of Figure 6. The designations of the reference numerals are as follows:
21: is the compression spring used to operate the latch.
22: is the latch for maintaining the coupling tubes in place.

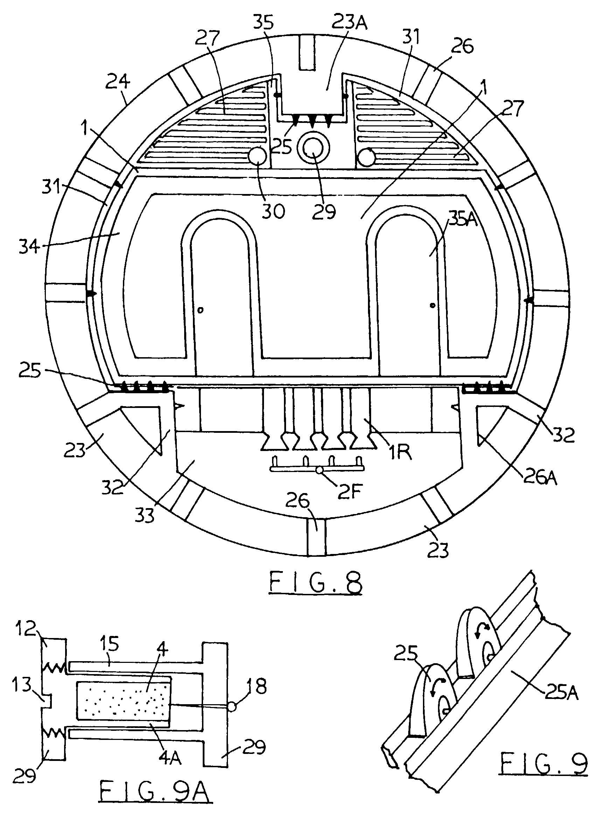

Figure 8 is a sectional view of the plane body along section line C-C of Figure 2. It shows the separate construction of the passengers cabin and the main body of the plane. A plurality of rollers (similar to rollers in a roller skate) are provided on the main body to allow the passengers cabin to separate by sliding away from the main body during an accident. The designations of the reference numerals are as follows:
31: is the spacing between the passengers cabin and the plane main body. The relationship between these parts is similar to that between a train and a tunnel without hitches securing the separate sections together.
23: is the sectional side view of the plane main body.
24: is the skin or shell of the plane main body along the severed point.
35A: are the sealing doors which are normally opened and will be shut in emergency. More detail will be shown in Figures 16, 17 and 18.

Figure 3B is a perspective view showing the landing of the passengers cabin on water, which is supported at its left and right side by floating rafts.

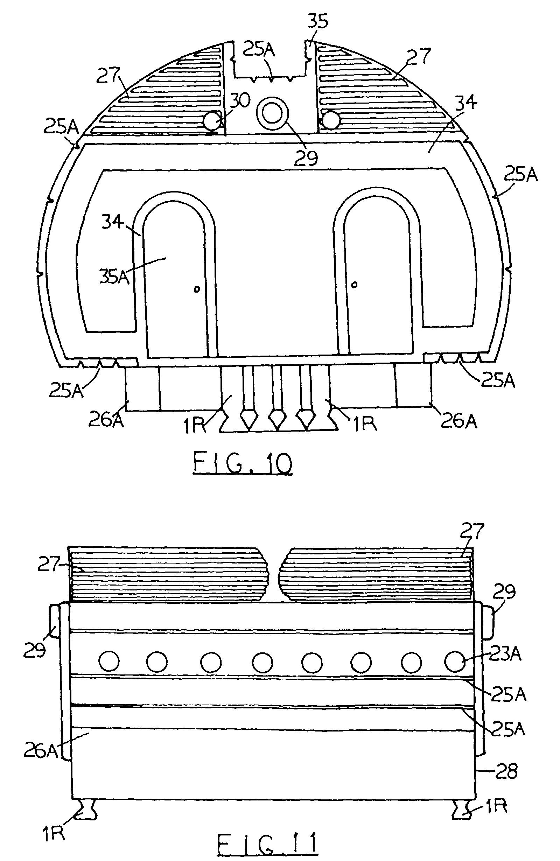

Figure 9 shows the separation rollers provided on the plane main body to facilitate the passengers cabin to slide away from the plane body on these rollers after the severance of the plane. The reference numeral 25A designates the mounting bars on the body of the plane for the rollers. These mounting bars permits the rollers 25 to rotate (similar to the rollers on a roller skate).

Figure 9A is a perspective view showing the detail construction of the missile fuel tube item 29 in Figure 8, which operates to push the various sections of the passengers cabin away from the plane body.

Figure 10 is a front perspective view of the passengers cabin which is capable of tightly shutting its seal doors, blocking the air vents, regulating its own cabin pressure. It also carries its own oxygen supply and heating means. Every section of the cabin is provided with four automatic actuating parachutes. A compressed air container is provided below the cabin, which will supply the air required to inflate the floating rafts. The relationship between the cabin and the plane body is similar to that between a train and a tunnel without coupling hitches provided between the separate sections of the passengers cabin. In order to prevent the plane body from rolling in the air, the channel 35 and 23A located at the joint of the projected support cooperate with the lower support 26A to sandwich the plane body and the passengers cabin securely in place.

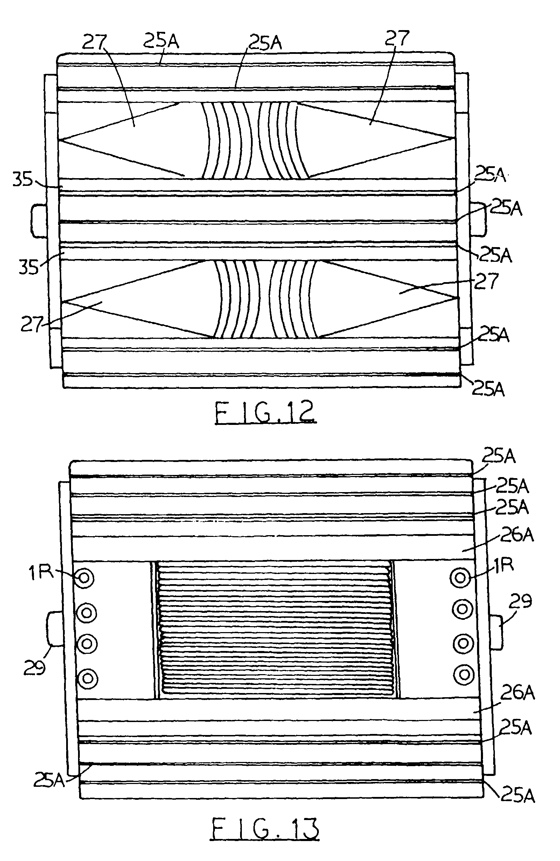

Figure 11 is a left to right side elevation of the passengers cabin.

Figure 12 is a top to bottom elevation view of the passengers cabin in which the designations of the reference numerals are as follows:
25: denotes the rollers as shown in Figure 9 mounted on the plane body and operative to permit the passengers cabin to slide out from the plane.
25A: are the channel bars located on the plane body for mounting the rollers.
26: are structural supports of the plane body.
27: designates the parachutes mounted on each section of the passengers cabin and may be deployed to provide safe descend of the passengers cabin to the ground.
1R: are the reverse missiles operative to provide a reverse thrust for slowing down the descend of the passengers cabin to a safe speed.
2F: are the landing missiles mounted on safety pillars in the passengers cabin. All missiles are provided with a safety nozsle.
28: are inflatable bags or rafts. The impact of the cabin on water will trigger the control to release the compressed air required for inflating these bags or rafts so as to provide the floatation for the cabin as shown in Figure 3B.
29: are the fuel tanks located between every two sections of the passengers cabin. An electric sensing eye is provided at the front end of the tank such that it will be actuated to release the fuel as soon as its front end is outside of the plane body during separation so as to increase the speed of separation of each section. This will ascertain a safe distance to be provided between the sections after separating from the plane body.
30: are the shock absorbers provided between the parachutes and the associated sections of the passengers cabin. These absorbers operate to reduce the thrust on the cabin during the deployment of the parachutes.
31: is the spacing between the passengers cabin sections and the plane body.
32: are the protruding footing for mounting the rollers which support the sliding movement of the passengers cabin.
33: is the luggage and various other compartments which are not integral with the passengers cabin.
34: is the hard plastic layer provided on the outside surface of the passengers cabin to reduce vibration or shock.
35: are support channel bars located at the top of the passengers cabin. They cooperate with the support bars 26A at the bottom of the passengers cabin to maintain the passengers cabin in a stable position when the plane body is rolling during the accident so that the passengers cabin may slide away from the plane safely.

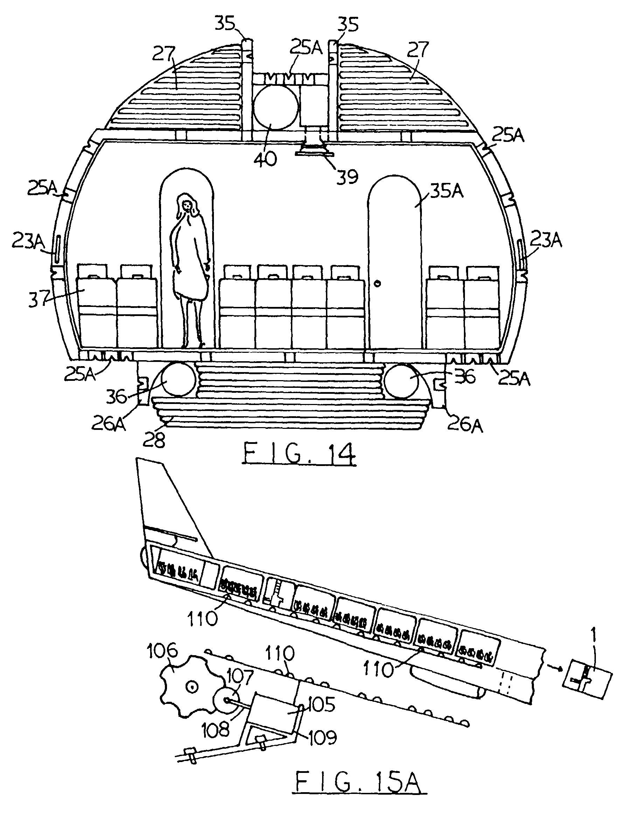

Figure 13 is a top perspective view of the passengers cabin.

Figure 14 is an elevation section view of the passengers cabin along section line G-G of Figure 12 showing the interior of the cabin and the seats.

Figure 15A is a perspective side view depicting the braking mechanism, similar to the ABS braking system in an automobile, for controlling the sliding movement of separation of each section of the passengers cabin from the plane body. The braking mechanism is not activated at the start of moment when the cabin is leaving the plane body so as to increase the speed of separation. This will ensure a safe distance is provided between the separated sections of the cabin after leaving the plane body without interfering with the deployment of the parachutes. An electric storage tank located at the tail end of the plane provides the initial power to push the passengers cabin out of the plane. The reference numerals in this figure are as follows:
105: is the ABS braking mechanism.
106: is a cam wheel mounted to a slow speed motor. (It acts like a driver's foot in an automobile to operate the braking mechanism)
107: is a free rotary wheel mounted to a coupling bar.
108: is the coupling bar.
109: is the fixed support.
110: are the brake shoes mounted on the plane body. The brake fluid is located in item 105 of the ABS braking mechanism.

Figure 15 depicts the sealing doors provided on each individual section of the passengers cabin. In order to carry out the principle of the present invention, the sealing doors must be shut immediately upon activation. The shutting operation of the doors is similar to the operation of pushing a bullet out of an air gun by compressed air. The reference numerals in this figure are as follows:
42: is an air explosion box located behind the wall when the door is opened for 90 degrees. It is inserted into a hard plastic cylinder having a trigger similar to that in an air gun which is electrically control similar to that in a toy cannon. In the accident, the electrical control will actuate the trigger so as to release an exploding air to shut the doors quickly.
43: is a hard plastic round door handle which cooperates with item 42 to shut the door tightly.
44: is a compressed air cylinder located at the top of the door. When the door is closed shut, a lifting mechanism such as item 48 in Fig. 17 will immediately cause the compressed air to be released to fill a hollow rubber tubing 46 located between the door and the door frame, in the meantime, the spring latches located at the top, middle and bottom of the door will latch the door frame to the floor. In doing so, the air pressure within the passengers cabin will be isolated from that in the plane body.
45: is the spring latch.
46: is the hollow rubber tubing mounted on the door frame.
47: is the electrical supply wiring.
48: is the lifting mechanism which operates to open the valve of the compressed air tank.

Figure 16 is a top cut view showing the door and the door frame.

Figure 17 is an isolated perspective view of the compressed air tank mounted at the top of the door. The tank provides the means to shut the sealing doors in each section of the passengers cabin in an accident. Normally, the sealing doors are opened. In an accident, the air bullet in the size of a coffee cup located behind the round door handle will be activated to shut the sealing doors and the spring latches will also be activated to maintain the doors shut. Also, the lifting mechanism will be activated to release the compressed air into the hollow rubber tubing around the door frame similar to the inflation of a rubber inner tire of an automobile to provide a tight seal for the doors.

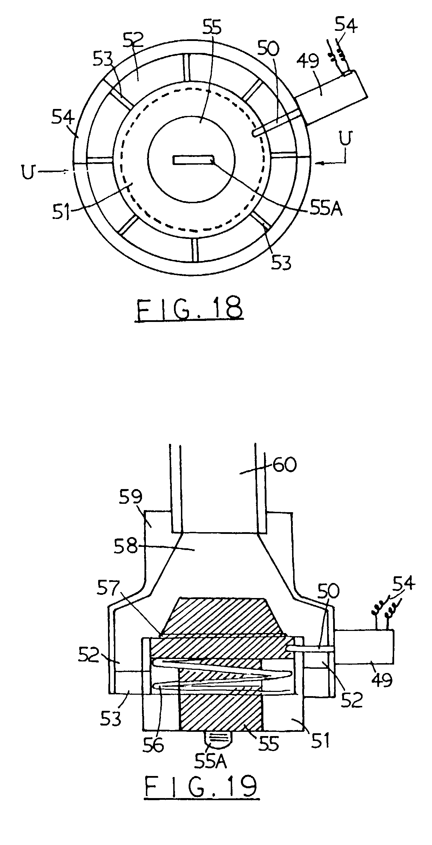

Figure 18 is a perspective view of the ventilation shut off valve for the passengers cabin. This valve is operative to maintain the air and air pressure within the passengers cabin. The reference numerals in this figure are as follows:
49: is the electromagnetic lock.
50: is the latch of the electromagnetic lock.
51: is a circular base supporting an up and down moving plunger and its biassing spring and the electromagnetic latch.
52: is the air duct.
53: are connectors located between the circular base 51 and the outer shell.
54: is the electrical conductor for the electromagnetic lock.
55: is the plunger. Normally this plunger 55 is maintained in a retracted position by the electromagnetic latch inserted into it, and in this position its reactive spring is compressed. In an emergency during the accident, the electromagnetic latch will be retracted so that the reactive spring will force the plunger to press against the air inlet so as to maintain the original air pressure within each section of the passengers cabin.

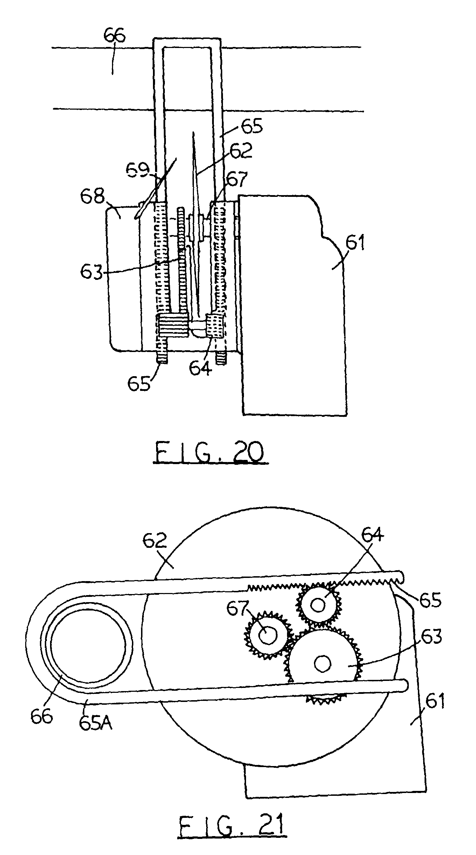

Figure 19 is a sectional side view along section line U-U of Figure 18. The reference numerals in this figure are as follows:
56: is the reactive spring. It is operative to press the plunger 55 tightly against the air outlet port 58.
57: is a rubber sealing O-ring.
58: is the air outlet port.
59: is the outer shell.
60: is the central air conditioning duct.

Figure 20 is a side elevation view of the automatic cutting mechanism. In the design of this invention, when the passengers cabin is separated from the plane body, the electrical wiring and the air conditioning duct will remain connected between them. The automatic cutting mechanism will be activated to sever the electrical wiring and the air conditioning duct in a very short time. The reference numerals in this figure are as follows:
61: is the electric motor.
62: is the circular cutting blade mounted to the shaft of the motor.
63: is the speed changing gear wheel.
64: is the speed stepping gear wheel coupled to the level rod 65 of the level gear.
65: is the coupling rod. Levelling gears are provided on the rod to couple with the teeth on wheel 64.
66: is the air duct which is to be cut.

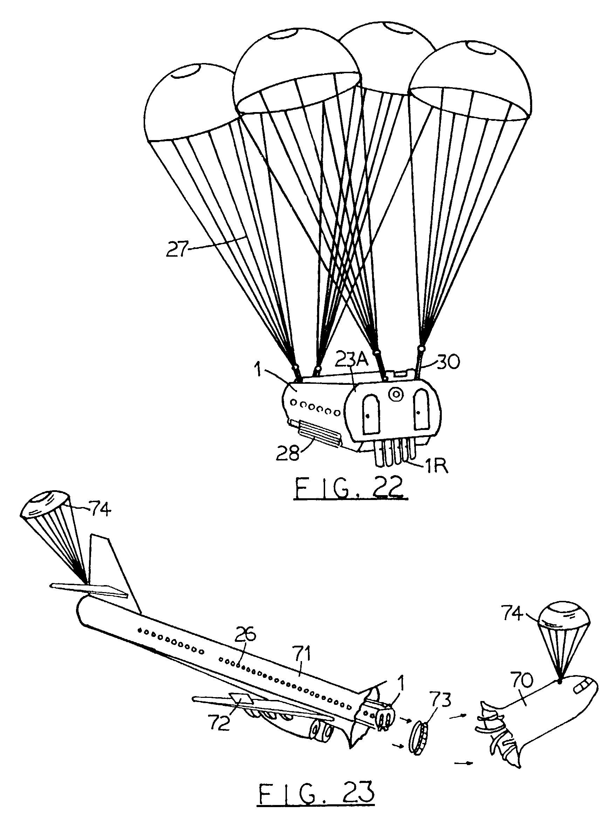

Figure 21 is side perspective view of the automatic cutting mechanism. The rotation of the teeth wheel 64 causes the coupling rod 65 to move forwards in a high speed to turn the circular blade to provide the cutting.

Figure 22 is a perspective view of a section of the passengers cabin suspended by the parachutes. The sealing doors are tightly shut. Its air duct outlet port is plugged to prevent leak. The interior of the cabin is provided with oxygen and heating.

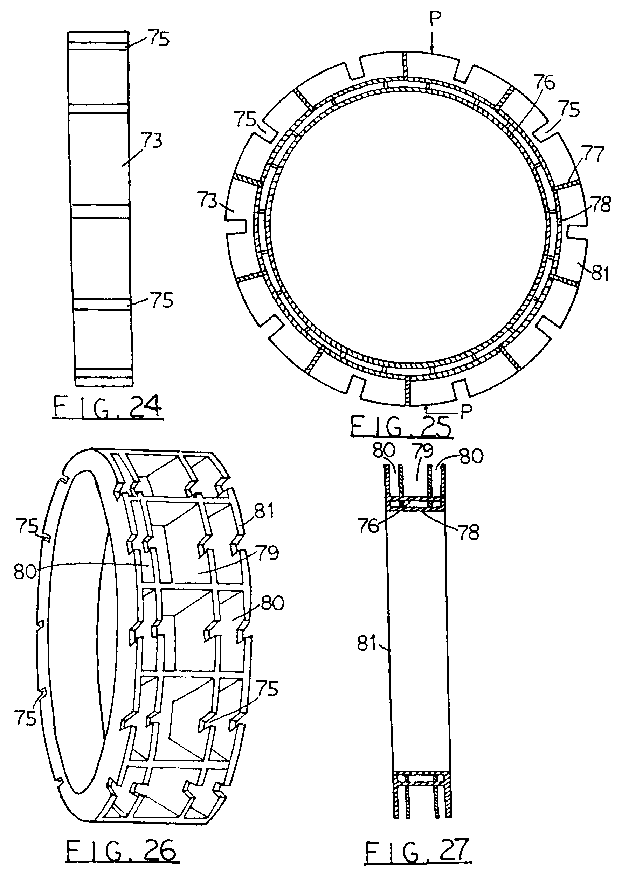

Figure 23 is a perspective view illustrating two alternative methods of severing the plane body in an air accident. The methods are (1) using fuseless explosion device (2) installing a dynamite box about 1/4 the size of a conventional grenade at a plurality of selected locations of the plane body frame. The cannon balls or the dynamite boxes are placed within an explosion ring 73 (the detail of which is shown in Figures 24 to 27) and they may be activated by electrically operated triggers. Such logical designs may be quickly and safely installed in a plane, for severing the plane body as shown in Figure 23, without any potential safety hazard. Such logical reasoning is based on that many families in the world possess guns and the bullets in the guns would not fire by themselves unless the safety trigger of the gun is activated. Similarly, grenades do not explode unless their safety pins are pulled.

Figure 24 is a side perspective view of the restrictive explosion ring.

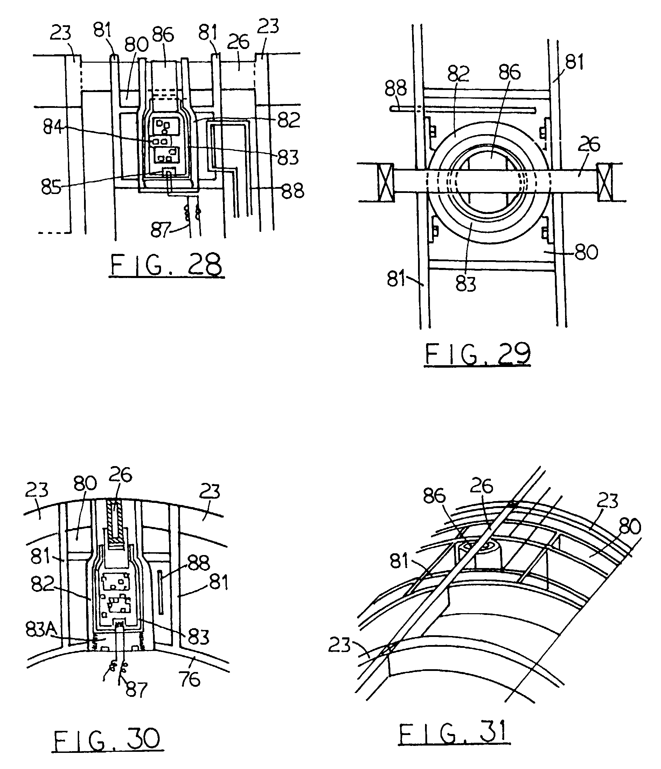

Figure 25 is front perspective view of the restrictive explosion ring.

Figure 26 is a perspective cut view of the explosion restriction ring showing its interior construction.

Figure 27 is a sectional side view along section line P-P of Figure 25. The reference numerals in this figure are as follows:
73: is the opening of the restrictive explosion ring.
75: are the peripheral grooves formed in the restrictive explosion ring to facilitate installation of the ring onto the plane frame.
76: is a reinforcing inner wall.
77: are radially located reinforcing rods.
78: in the circular base wall of the restrictive explosion ring.
79: are compartments for locating the explosive.
80: is a secondary safety space provided between the explosive compartments and the side protective plate of the ring.
81: is the reinforcing side protective plate.

Figure 28 is an isolated side view showing the placement of the fuseless explosion device in the restrictive explosion ring.

Figure 29 is a top elevation view of that shown in Figure 28.

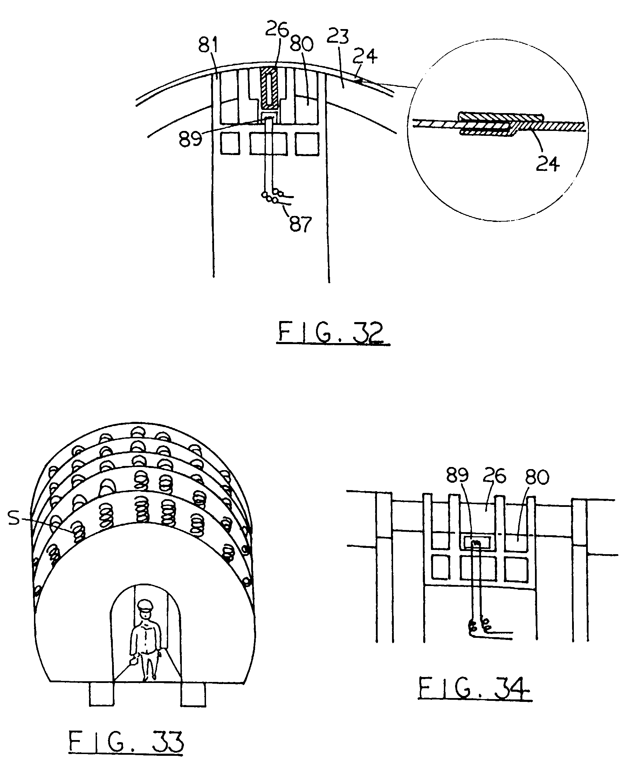

Figure 30 is a sectional front view of that shown in Figure 28 with the plane body extending transverse to the explosion ring. The reference numerals in this figure are as follows:
82: is the protective ring for the explosion devices.
83: is the shell of the explosion device.
83A: is a threaded base which may be removed for examining the explosion device.
84: is an explosive pouch or box.
85: is the electrical trigger for firing the bomb.
86: is a cutting knife provided on the bomb.
87: is the conducting wire for the electrical power for the trigger.
88: is a surrounding water cooling jacket for maintaining the explosion ring in a low temperature.

Figure 31 is an isolated cut view of that shown in Figures 28, 29 and 30.

Figure 32 is an isolated cut view of the installation of the explosive 89 (which may be examined daily by using the design shown in 83A).

Figure 33 is a perspective cut view of item 3 in Figure 2 showing the plurality of springs S operative to reduce the impact when the plane crashes against a mountain or in a forced landing, or in an accident at a low altitude during take off.

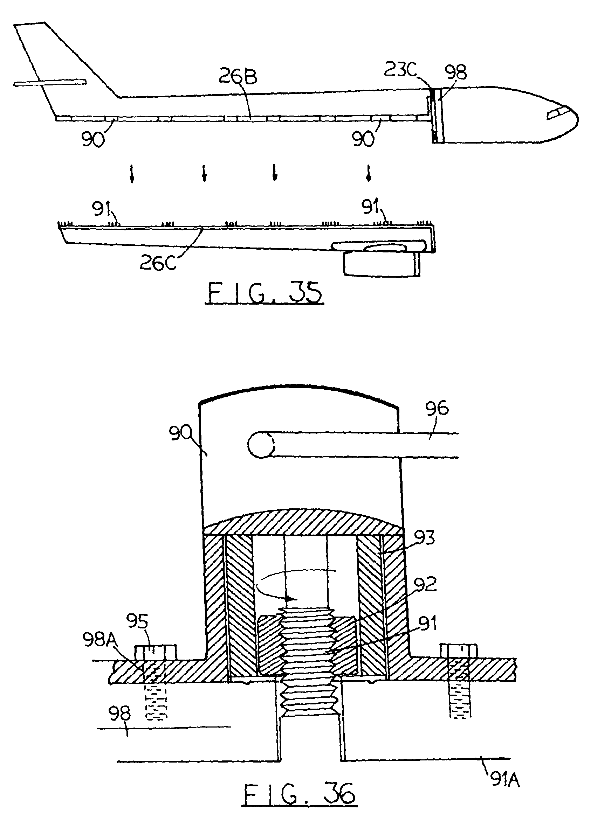

Figure 34 is an isolated sectional side view of a portion shown in Figure 32.

Figure 35 is an air pneumatic wrench. As shown above the main issue of the present invention is that in an air accident the only method to sever a plane body is by explosion. The following Figures 35 to 41 show three methods of severing the plane body in a static manner. One method is by employing pneumatic wrenches( used in turning the securing of nuts when changing a tire in an automobile) which are positioned in selected locations so that they may be used for loosening mounting nuts or screws in the air accident. As shown in Figure 36 the pneumatic wrenches may be used to disassemble the plane body within one minute.

Figure 36 is a partial sectional side view of a pneumatic wrench for loosening a mounting nut. The reference numerals in this figure are as follows:
90: is the pneumatic wrench used for loosening the mounting nut.
91: is the threaded bolt located on a circular ring 99.(As shown in Figure 3A)
92: is a securing nut in cooperation with the threaded bolt 91 to secure the joints 98 and 99 of the front and back portions of the plane body together.( See Figure 38) Similar securement is used for items 26B and 26C as shown in Figure 35.
93: is a section of the rotating pneumatic wrench grasping the securing nut.
94: is the compressed air conducting tube.
95: are bolts for securing a mounting ring 98A on the plane frame 98.

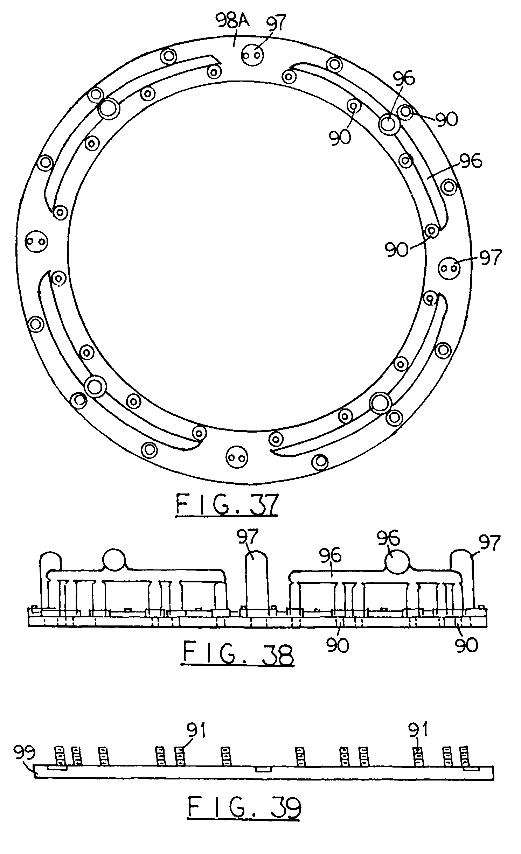

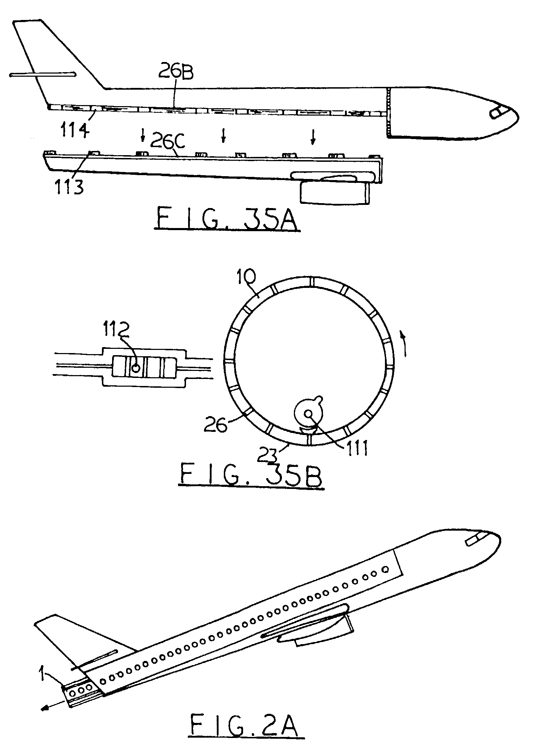

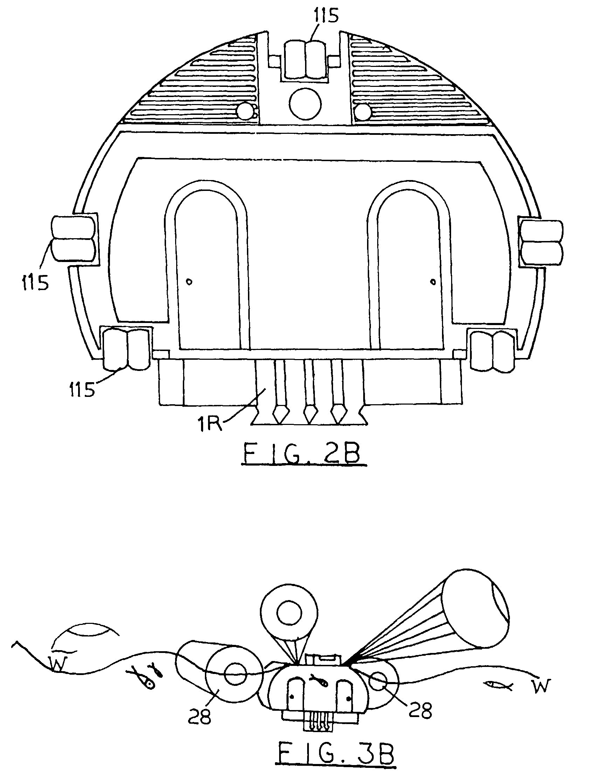

Figure 37 is a front elevation view of the mounting ring 98A. The size of the ring is identical to the diameter of the plane body. A plurality of pneumatic wrenches equal in number to the number of plane body mounting nuts are provided on this mounting ring. The compressed air ducts 96 as shown in Figure 3 are also provided on this mounting ring. The pneumatic wrenches may be activated to loosen all the mounting nuts simultaneously, and after the nuts have been loosened, compressed air is released through four air releasing ports to force the separation of the now unsecured portions of the plane body. The reference numerals is this figure are as follows:
96: is the compressed air conducting duct.
97: are the air releasing ports. More detail is shown in Figure 41.
98: is a connecting ring provided on the plane body for engaging with item 99.
99: is the other connecting ring provided on the plane body located at B-B in Figure 1.
100: is a sliding plunger.

Figure 38 is a side elevation view of that shown in Figure 37.

Figure 39 is a side elevation view of the mounting ring located at B-B of the plane body in Figure 1, similar to that shown in the relationship between items 99, 98 and 98A in the sectional side view in Figure 36.

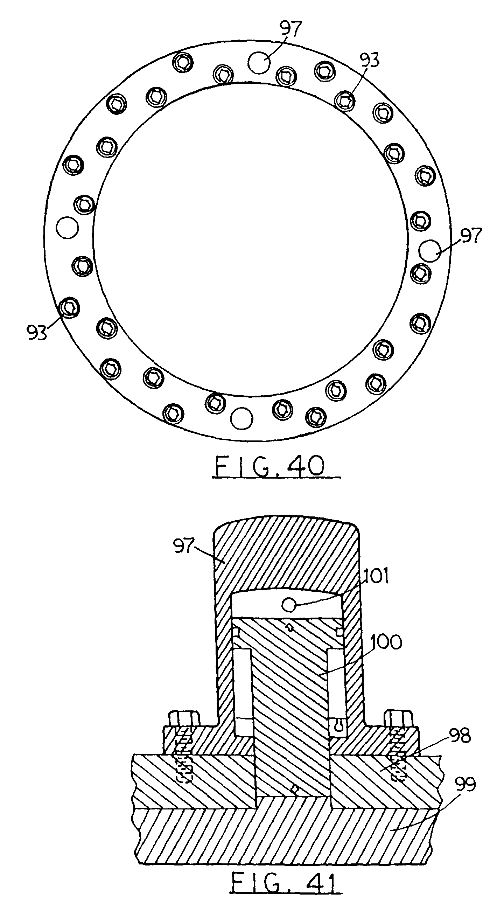

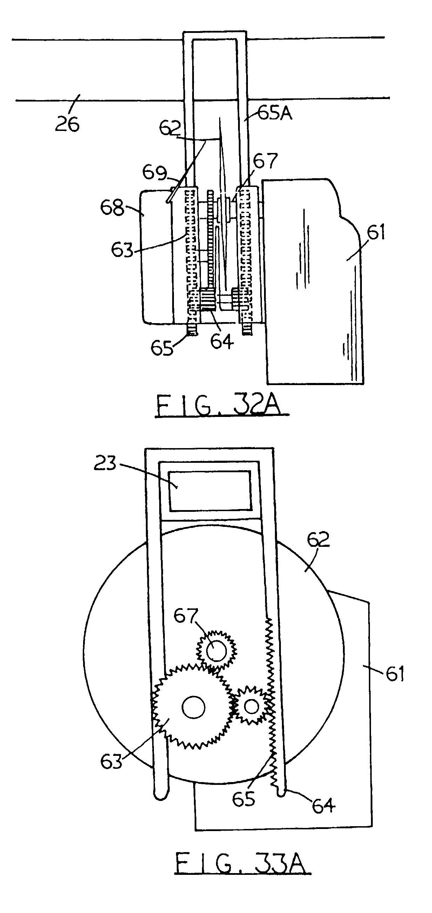

Figure 40 is rear perspective view of the mounting ring.

Figure 41 is a sectional side view of the compressed air operated separation device 97. It is mounted on the mounting ring 98A It operates to separate the two mounting rings after the securing nuts have been loosened and the mounting bolts are completely removed. The reference number 101 designates the compressed air inlet, the opening of which is delayed by one minute than item 93.

Figure 32A is front perspective view of a constant high speed cutting mechanism. It is used as the third means for severing the plane body for saving the lives of the passengers. In this embodiment, a constant high speed cutting mechanism is provided at each selected support in the plane body. When the supports are cut, the thin alloy shell of the plane would naturally break and separate so that the plane body will break up into two portions within one to two minutes. This is similar to that shown in Figures 20 and 21 but it is effected with a greater power.

Figure 33A is a front perspective view of the constant high speed cutting mechanism of Figure 32A.

Figure 7A a sectional view showing an alternative missile mounting similar to that shown in Figure 7. The difference is that 3A has a protruding rod which is inserted into a sleeve in 3B. The plunger of the electromagnetic latch is inserted into a magnetizable sleeve 103. When the firing pin 18 is actuated to fire the missile, the electrical supply becomes cut off from the sleeve so that the sleeve 103 is no longer magnetized and the electromagnetic latch will then retract resulting in the breaking of the plane body.

Figure 35A is a sectional side view showing another alternative method of severing the plane body to save the lives of the hundreds of passengers in the accident without causing any commotion or confusion. The entire operation may be established automatically within 1 to 2 minutes without any announcement. All passengers including men, women, young and old would continue enjoying the music while their lives are being saved. This is truly a miracle.
For another twenty days it will be the new century. It is the spirit of the present invention to save lives in an air accident by severing the plane. Figure 35A shows the use of a cutting laser for severing the plane body either transversely or longitudinally into two halves quickly and quietly. This method is illustrated by Figures 35A and 35B in which the reference numerals are as follows:
111: is a laser gun which is rotatable through 360 degrees.
112: is a laser knife which is rotatable through 180 degrees to cut the plane body at welding points 114 located between the longitudinal supporting rods 26B and 26C. It is only necessary to cut the plane body inside out at several welding points 114 with the laser knife.
113 and 114: are the welding points at which the supporting rods 26B and 26C are welded to the plane body.

Figure 2B is a front perspective view of an alternative embodiment with rollers provided directly on the passengers cabin section. Reference numeral 115 designates the rollers provided on the passengers cabin section in this embodiment.

Figure 2A is a side perspective view showing another embodiment in which an exit door is provided at the tail end of the plane. When the plane is in distress, the pilot, within a few minutes after consulting with the control computer, makes the decision to abandon the plane in order to save the lives of the passengers. Once this decision is made, the pilot would raise the front of the plane and would open the exit door such that all the passengers cabin sections would automatically slide out of the plane through the now opened the back exit door. The exiting cabin sections would also operate all those functions as shown in Figure 15A.

### DETAILED DESCRIPTION OF THE PREFERRED EMBODIMENTS

A conventional plane may be revised to function according to the present invention by changing the existing passengers cabin into an outer protective shell of the plane's main body. One or a plurality of independent carriages are slidably and securely located in tandem in a row within the main body to serve as the passengers cabin sections 1 and 2 as shown in Figure 2. The cabin sections are independently movable relative to the main body. They share a common control harness but they are not coupled together by hitches. Normally the doors of all the passengers cabin sections are opened to allow people to move among them. In an emergency, as shown in Figures 15, 16, and 17 the doors can be closed and sealed quickly with their air vents closed as shown in Figures 18 and 19, and the harness is severed by the specially designed automatic cutting mechanism as shown in Figures 20 and 21, so that the passengers cabin sections may be separated freely from the plane body. The relationship between the plane body and the passengers cabin sections is similar to that between a train and a tunnel.

As illustrated in Figure 2, the passengers cabin sections located in the plane body, like a train located within a tunnel, must be able to exit the plane body either at the front or the rear of the plane. The chances of exiting from the rear of the plane are normally rare since when an air disaster suddenly occurs without warning it is most likely that the uncontrollable plane would descend with its front end pointing downwards. Although this assumption can not be ascertained since it is not substantiated by any report from the pilots in the Transworld, Swiss, and Egypt Airlines accidents. For the above reasons, the present invention prefers to employ the method of severing the plane body by explosion as shown in Figure 3. The plane body is divided into two portions which are joined together by providing a circular mounting ring in each. Six missiles are mounted in the mounting ring 3B of the front portion as shown in Figure 3. Six mounting bars extend outwards from the mounting ring of the front portion to insert into the missile chambers 15 of Figure 7 in the mounting ring 3A of the rear portion. Also, six mounting bars 5 of Figure 7 extends from the mounting ring 3B in the rear portion and are inserted into the mounting sleeves provided in the mounting ring 3 A of the front portion. As shown in Figure 7 the mounting sleeves are inserted into the compressed air actuated spring locks. The securement of the separable two portions of the plane body may be supplemented by the electromagnetic mounting sleeves as shown in Figure 7A. The joint between the front and rear portions is located in front of the plane engine and the landing wheels such that it subjects to only very low stress. In an emergency when an air accident occurs and the abandonment of the plane has been made, the missiles 4 are fired, and they will impact upon 19 of Figure 7 to loosen the frame of the plane body. This chain reaction causes the shell of the plane to break into two portions along the joint 24 of Figure 32. As described previously, since the landing flaps of the wings have already been locked in the descend position as shown in 11 of Figure 3, and with the deployment of the parachute located at the tail end of the plane, the front end of the plane will be pointing downwards such that the passengers cabin sections will naturally slide out from the now opened broken front end of the plane.

The alternative method as shown in Figure 28 of breaking the plane body with bombs without explosive is more fast acting than the above described practical method of breaking the plane body along the joint between two mounting rings. In this embodiment, bombs without explosive are located at the supporting bars of the frame of the plane. The explosion of the bombs are confined by explosion rings 73 shown in Figure 23 and 26. The plane body may be broken apart with the immediate firing of the bombs so that the passengers cabin sections may separate from the distressed plane body. A further embodiment similar to the above embodiment, is by placing explosive at various selected location on the plane as shown in Figure 32. In this embodiment, grenades of about 1/4 size of a conventional grenade, are provided in explosion rings mounted at various supports of the plane body. The grenades may than be activated with electrical triggers to break apart the plane body in an air accident so that the passengers cabin sections can be separated from the plane body and safely supported and landed with the provision of parachutes.

In the above three embodiments, the principle of the present invention is carried out by an abrupt action to break the plane body such that the passengers cabin sections may be quickly separated from the distressed plane and supported by parachutes to land safely on the ground so as to save the lives of the passengers.

A further static embodiment is shown in Figures 35A and 35B. In this refined embodiment, laser cutting knives are employed to sever the plane body so that the plane body of the distressed plane would break apart automatically in the longitudinal direction. As shown in Figures 35 and 35A, the weld joints of all the circular support rings on the left and right sides over the entire length of the plane body are cut to separate it into an upper and lower portions. In this manner, the passengers cabin sections may fall out of the plane body together with the falling lower portion of the plane body and be subsequently supported by the parachutes.

In the present design, the common single passengers cabin for the three to four hundred passengers is divided into a plurality of passengers cabin sections which join together to provide a common function identical to that of a single cabin. However, within a moment of the occurrence of an accident, these sections are tightly sealed to form separate independent units which may be supported by parachutes and controlled by landing missiles to land safely on the ground. The invention provides a logical way of supporting the collective weight of all the passengers such that so many lives can be carried and saved in a short moment. This is entirely different than that shown in movies in which only a few people in a full plane can be saved and the people must necessarily leave their seats and cabin during the live saving operation.

The important feature in the present invention in saving lives is as shown in Figures 10 and 22 which employs the sealing of the doors quickly as shown in Figures 15, 16 and 17. More importantly, it is the common use of the landing missile as shown in 1R of Figure 13 to reduce the speed of descend of the passengers cabin.
The advantages of the present invention are as follows:
a. Making the total fatality of an air accident a past history. Relieve the underlying fear in the billions of passengers when they step on board an airplane. Use of a flight recorder black box will no longer be the answer to an air accident.
b. No wasting of time and expense in making changes to the air plane building industry, material and personnel. The weight increase by the aluminum alloy in making the changes in the passengers cabin is minimal, and more than 95% of the conventional seating arrangement can be retained.
c. Wisdom is bred by education and wisdom brings further wisdom, for this reason, I would donate 30% of the profit derived from this patent to the education of gifted students from poor families.
d. The plane constructed according to the present invention provides a higher survival rate than a conventionally constructed plane even when the following air accidents occurred at a low altitude which does not allow the proper use of the parachutes and landing missiles:
   (1) Crash into a mountain: On the left side of the door entrance to each section of the passengers cabin, an empty section without seats is provided, which is used as a passage way for the flight attendants. A plurality of springs are provided in circular rings around this empty section such that in a head on crash it would absorb the impact. Additionally, within a second before impact, the pilot would activate the explosive to break the plane body such that the subsequent passengers cabin sections may be saved.
   (2) Forced landing due to fire: The heat protective shell of each passengers cabin section would protect the passengers from heat and smoke under this circumstance. Also, the plane body would be broken to facilitate access to the fire in the extinguishing operation such that at least eight out ten of the passengers cabin sections are fully saved.
   (3) Crash during take off from the runway: similar to (1) and (2) above, the survival rate is increased.
   (4) The explosive and grenades are located in tightly sealed housings which are made of the best fire and heat resistant material, and they are activated only by electrical means. Furthermore, the explosion rings 73 as shown in Figure 23 are located in front of the engine and the fuel tank so that they are not affected by small fire occurring during flight.
   (5) Within a few seconds prior to the occurrence of (1) and (2) above, a parachute 74 located at the tail end of the plane as shown in Figure 23 would be deployed as shown together with the reduction of flying speed, the survival rate would thus be increased.

## Claims

1. An airplane operative to save lives of passengers therein in an air accident, comprising,
an elongated outer shell forming a main body of said airplane,
a passengers cabin having at least one section slidably located within said outer shell, said passengers cabin being structurally independent of said outer shell and sharing only a severable control harness therewith,
each section of said passengers cabin being provided with self-reliant oxygen supply, heating, deployable parachutes and inflatable floatation rafts, landing speed control missiles, and sealing doors operative to seal said section into a protective closed unit for passengers located therein,
a plurality of rollers provided between said outer shell and said passengers cabin whereby said passengers cabin is slidably separable from said main body in an air accident.

2. An airplane according to Claim 1 wherein said at least one section is slidably located in a tandem manner in a row within said main body similar to unhitched train carts passing through a tunnel, each one section forming an independent unit provided with a heat protective shell and parachutes and landing speed control missiles and being separable from said main body when an accident occurs.

3. An airplane according to Claim 2 wherein said main body is severable in a predetermined breakable location therein by controlled explosion to provide an exit opening for said plurality of sections of passengers cabin to separate from said main body.

4. An airplane according to Claim 2 including a rear exit door provided in said main body, said rear exit door being operative in an accident to facilitate separation of said plurality of sections of passengers cabin from said main body, and rollers being provided between said main body and said sections of passengers cabin for said sections to slide away from said main body.

5. An airplane according to Claim 3 wherein said rollers are mounted on supporting channel bars located in said main body.

6. An airplane according to Claim 5 wherein said parachutes are selectively located at a front end and rear end of each section of said passengers cabin.

7. An airplane according to Claim 5 wherein said main body is separable into a front portion and a rear portion at said breakable location, a first mounting ring mounted to said front portion and a second mounting ring mounted to said rear portion, and said first mounting ring and second mounting ring being engageable with one another for securing said front portion and rear portion together, a plurality of missiles and explosive cylinders and mounting sleeves adapted in said first mounting ring and second mounting ring, said missiles and explosive cylinders being operative to sever said main body at said breakable location.

8. An airplane according to Claim 5 including an explosion restriction ring mounted at said breakable location of said main body, and explosive provided in said explosion restriction ring and being operative to sever said main body of said airplane at said breakable location.

9. An airplane according to Claim 5 including a plurality of blasting units located on an explosion restriction ring located at said breakable location of said main body, said blasting units being selectively operative to sever said main body at said breakable location when an air accident occurs.

10. An airplane according to Claim 5 wherein said main body of said airplane is severable into two portions mounted together with a plurality of threaded nuts, a pneumatic wrench coupled to each one of said threaded nuts and being operative to loosen said nuts for severing said main body into separated two portions.

11. An airplane according to Claim 5 including a plurality of electrically operated automatic cutting mechanisms provided at selected frame supports in said main body and adapted to cut said frame supports to sever said main body.

12. An airplane according to Claim 5 including a laser cutting member mounted in said main body, said laser cutting member being operative to rotate from 180 degrees to 360 degrees for cutting said main body when said airplane is in an air accident.

13. An airplane according to Claim 3 including a handle provided on said sealing doors, an explosive cylinder mounted adjacent to said sealing doors and being operative to generate a high speed air for closing said sealing doors to seal said sections of passengers cabin completely to form independent individual units.

14. An airplane according to Claim 5 wherein said main body is separable into a front portion and a rear portion along a breakable location, a first mounting ring mounted in said front portion adjacent to said breakable location, a second mounting ring mounted in said rear portion adjacent to said breakable location, a plurality of electromagnetic sleeves provided in said first mounting ring and second mounting ring, a plurality of electromagnetic spring latches provided in said first mounting ring and second mounting ring, said electromagnetic sleeve and said electromagnetic spring latches being engageable with one another to secure said first portion and second portion together when said electromagnetic spring latches and electromagnetic sleeves are normally energized by an electrical supply, missile and explosive cylinder located in said main body and being operative to terminate said electrical supply whereby said electromagnetic spring latches disengage with said electromagnetic sleeves to cause said main body to sever along said breakable location.

15. An airplane according to Claim 14 including a braking device provided in each section of said sections of passengers cabin and being operative to control sliding speeds of said sections to ensure sufficient distances among said sections to facilitate deployment of said parachutes after said sections of passengers cabin having separated from said main body.

16. An airplane according to Claim 15 wherein said sections of passengers cabin are separable from said main body of said airplane with said passengers remaining calmly seated in assigned seats therein during an accident, said sealing doors being completely shut and oxygen supply, selected cabin pressure and heating being provided in each section with said parachutes and control missiles operative to facilitate safe landing of said section, and inflatable floatation rafts on all said sections being inflated automatically when said sections land on water.

17. An airplane according to Claim 3 wherein each section of said passengers cabin has a front end portion located towards said breakable location, a shock absorbing device provided at said front end portion of said each section, said shock absorbing device including a plurality of springs housed in a mounting chamber, said shock absorbing device being operative to absorb impact force exerted on said each section when said airplane crashes against a mountain.

18. An airplane operative for saving lives of passengers therein in an air accident, comprising
an outer shell forming a main body of said airplane, said outer shell being severable at a predetermined breakable location to provide an exit opening in said main body,
a plurality of passengers cabin units slidably located within said outer shell, said passengers cabin units being structurally independent from said outer shell and being provided with individual oxygen supply, heating and sealing doors, said sealing doors being operative to shut quickly in said accident to seal said passengers cabin units into individually operative survival units separable from said main body by exiting slidably out through said exit opening,
parachutes mounted on said survival units and being deployable to suspend said survival units in air after said survival units having separated from said main body,
reverse speed control missiles mounted on said survival units and being operative to control said survival units' descending speed in air,
inflatable floatation rafts provided on said survival units and being inflated automatically to support said survival units when said survival units land on water,
said passengers remaining seated in assigned seats during separation of said survival units from said main body, all operations being carried out without disturbance to the passengers regardless of old and weak or young who cannot protect themselves so as to achieve the successful design of the present invention such that over hundreds of passengers could escape otherwise imminent death and also relieving fear and pressure in billions of passengers boarding any airplane, said operation being a key principle of the mother and son lives saving airplane of the new century, said principle defined herein being intended to cover all modifications falling within the spirit of the present invention.
